# EUROPÄISCHE PATENTSCHRIFT

(11) **EP 0 780 018 B1**
(45) Veröffentlichungstag und Bekanntmachung des Hinweises auf die Patenterteilung: **17.06.1998**
(21) Anmeldenummer: 95932611.7
(22) Anmeldetag: 28.08.1995
(51) Int. Cl.: G21C 3/356

(54) **MIT ZUNGENFEDERN VERSEHENER ABSTANDHALTER UND MIT DERARTIGEM ABSTANDHALTER VERSEHENES KERNBRENNSTABBÜNDEL**
SPACER FITTED WITH LEAF SPRINGS AND NUCLEAR FUEL ROD ASSEMBLY FITTED THEREWITH
GRILLE ENTRETOISE POURVUE DE RESSORTS A LAME ET ASSEMBLAGE DE CRAYONS COMBUSTIBLES NUCLEAIRES POURVU DE CE TYPE DE GRILLE ENTRETOISE

(30) Priorität: 09.09.1994 DE 4432147
(43) Veröffentlichungstag der Anmeldung: 25.06.1997
(73) Patentinhaber: SIEMENS AKTIENGESELLSCHAFT, 80333 München (DE)
(72) Erfinder: LETTAU, Hans, D-91090 Effeltrich (DE)
(86) Internationale Anmeldenummer: DE9501145
(87) Internationale Veröffentlichungsnummer: WO9608016

(56) Entgegenhaltungen:
- EP-A- 0 025 395
- EP-A- 0 080 853
- US-A- 3 769 159

## Beschreibung

Die Erfindung betrifft einen Abstandhalter für ein Kernreaktorbrennelement entsprechend dem Oberbegriff des Patentanspruchs 1.

Ein derartiger Abstandhalter ist aus EP-B-0 080 853 bekannt. Die Kontur der Zungenfeder dieses bekannten Abstandhalters verjüngt sich hin zu dem Ende der Zungenfeder, das in die Gittermasche hineinragt und mit dem der in der Gittermasche befindliche Stab an der Anlagenoppe kraftschlüssig gehalten wird. Die Fläche, mit der diese Zungenfeder an dem Stab in der Gittermasche anliegt, ist verhältnismäßig klein, so daß die Gefahr besteht, daß die Zungenfeder im Reaktorkern eines von einem Kühlmittel durchströmten Kernreaktors sehr schnell ermüdet und ein seitliches Schlagen des in der Gittermasche befindlichen Stabs gegen die Zungenfeder, das sogenannte "fretting" auftritt und zu Schäden am Stab führt.

Der Erfindung liegt die Aufgabe zugrunde, dieses "fretting" zu vermeiden.

Die Aufgabe wird erfindungsgemäß durch die Merkmale des kennzeichnenden Teils des Patentanspruchs 1 gelöst.
Aufgrund des Durchbruchs in der Zungenfeder, dessen Kontur sich zum Blechsteg hin verjüngt, kann eine Plastifizierung des Werkstoffs der Zungenfeder bei den Betriebsbedingungen in einem Kernreaktor zumindest so weit vermieden werden, daß die Zungenfeder sich ständig - auch bei langen Einsatzzeiten des Abstandhalters in einem Kernreaktor - stets von selbst an den Stab in der Gittermasche anlegt und deshalb "fretting" ausgeschlossen ist.

Patentanspruch 2 ist auf eine vorteilhafte Weiterbildung gerichtet, durch die die mechanische Belastung der Zungenfeder an ihrer am Blechsteg angebrachten Zungenkante optimal gering gehalten wird und die Zungenfeder deshalb nur besonders langsam altert.

Dies läßt sich auch mit einer Maßnahme entsprechend Patentanspruch 3 erzielen, jedoch mit dem zusätzlichen Vorteil, daß die Zungenfeder über eine optimal große Länge am in der Gittermasche befindlichen Stab anliegen kann, wodurch ebenfalls "fretting" unterdrückt wird.

Die Weiterbildung nach Patentanspruch 6 bewirkt nicht nur einen optimal geringen Strömungswiderstand des Abstandhalters in einem Kernreaktorbrennelement, das in einem Kernreaktor in Längsrichtung von einer Kühlflüssigkeit durchströmt wird, sondern auch eine lang anhaltende spielfreie kraftschlüssige Halterung eines Stabs in der Gittermasche. Dies schließt das "fretting" ebenfalls aus.

Patentanspruch 9 betrifft ein Kernreaktorbrennelement mit einem Abstandhalter gemäß einem der Ansprüche 1-8.

Die Erfindung und ihre Vorteile seien anhand der Zeichnung an Ausführungsbeispielen näher erläutert:
- FIG 1: zeigt in Seitenansicht und schematisch ein Kernreaktorbrennelement für einen Siedewasserkernreaktor, obwohl die Erfindung auch für einen Druckwasserkernreaktor geeignet ist.
- FIG 2: zeigt stark schematisiert eine Draufsicht auf einen Teil eines gitterförmigen Abstandhalters des Kernreaktorbrennelements nach FIG 1.
- FIG 3: zeigt in perspektivischer Darstellung die Wand einer Gittermasche des gitterförmigen Abstandhalters nach FIG 2.
- FIG 4: zeigt in perspektivischer Darstellung eine andere Wand einer Gittermasche des gitterförmigen Abstandhalters nach FIG 2.
- FIG 5: zeigt in Seitenansicht eine Abänderung an der Wand nach FIG 3.

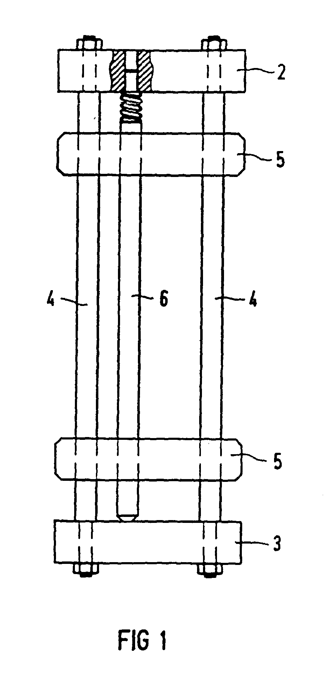

Wie FIG 1 zeigt, weist ein Kernreaktorbrennelement für einen Siedewasserkernreaktor einen Brennelementkopf 2 und einen Brennelementfuß 3 auf. Ferner sind zwei mit Kernbrennstoff gefüllte Brennstäbe 4 erkennbar, von denen jeder mit einem Ende am Brennelementkopf 2 und mit dem anderen Ende am Brennelementfuß 3 festgeschraubt ist. Jeder der beiden Brennstäbe 4 ist durch jeweils eine Masche von gitterförmigen Abstandhaltern 5 geführt, die mit Abstand voneinander zwischen Brennelementkopf 2 und Brennelementfuß 3 angeordnet und außen an den Brennstäben 4 formschlüssig gehaltert oder festgeschweißt sind.

Weitere mit Kernbrennstoff gefüllte Brennstäbe, von denen nur ein einziger Brennstab 6 in FIG 1 dargestellt ist, sind parallel zueinander und parallel zu den Brennstäben 4 zwischen Brennelementkopf 2 und Brennelementfuß 3 angeordnet. Jeder Brennstab 6 ist jeweils durch eine Gittermasche des gitterförmigen Abstandhalters 5 geführt und in diesen Gittermaschen kraftschlüssig gehaltert. Jeder Brennstab 6 steht lose auf dem Brennelementfuß 3 auf und durchgreift lose den Brennelementkopf 2.

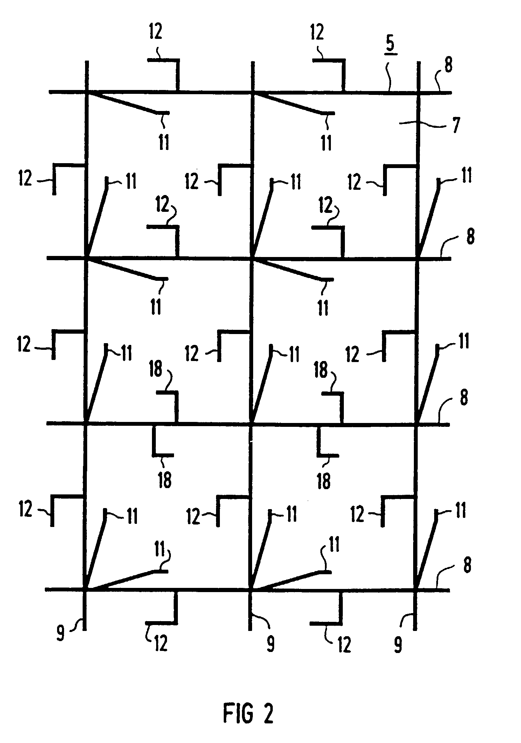

Wie FIG 2 zeigt, hat ein gitterförmiger Abstandhalter 5 Gittermaschen 7 jeweils mit quadratischem Querschnitt. Der gitterförmige Abstandhalter 5 weist sich hochkant durchsetzende Blechstege 8 und 9 auf, von denen die Blechstege 8 einer ersten Gruppe zueinander parallel sind und zu den zueinander parallelen Blechstegen 9 einer zweiten Gruppe rechtwinklig angeordnet sind.

In jede Gittermasche 7 des Abstandhalters 5 ragen je zwei Zungenfedern 11 hinein, die jeweils zwei Anlagenoppen 12 bzw. 18 in jeder Gittermasche 7 zum kraftschlüssigen Halten eines in FIG 2 nicht dargestellten Stabs, z.B. eines Brennstabs 4 oder 6, zugeordnet sind.

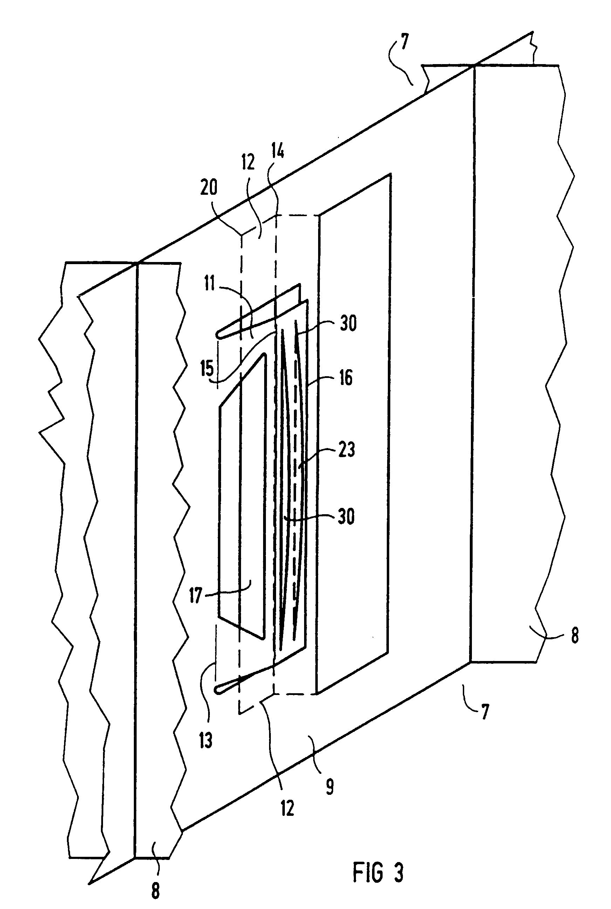

FIG 3 zeigt eine Wand einer Gittermasche 7 an einer Stelle eines Blechstegs 9, an der sich auf der einen Seite dieses Blechstegs 9 eine Zungenfeder 11 in einer Gittermasche 7 und eine Anlagenoppe 12 auf der anderen Seite des Biechstegs 9 in einer anderen Gittermasche 7 in FIG 2 befindet.

Wie FIG 3 weiter zeigt, ist die Außenkontur der Zungenfeder 11 ein Rechteck. Um eine sich in Längsrichtung der Gittermaschen 7 erstreckende (lange) Zungenkante 13 ist die aus dem Blechsteg 9 herausgeschnittene Zungenfeder 11 auf die eine Seite des Blechstegs 9 in eine der Gittermaschen 7 hineingebogen. Die Zungenfeder 11 ragt also aus dem Blechsteg 9 heraus. Auf der anderen Seite des Blechstegs 9 ist eine Anlagenoppe 12 in eine andere, benachbarte Gittermasche 7 um eine Biegekante im Blechsteg 9 hineingebogen, die sich in Längsrichtung der Gittermaschen 7 erstreckt. Bei dieser Anlagenoppe 12 handelt es sich um einen aus dem Blechsteg 9 herausgeschnittenen Blechstreifen, der eine quer, d.h. in Längsrichtung der Gittermaschen 7 verlaufende Knickkante 14 und eine ebenfalls in Längsrichtung der Gittermasche 7 verlaufende Endkante 20 hat, mit der der Blechstreifen aus dem Blechsteg 9 herausragt. An der Knickkante 14 ist der Blechstreifen zum Blechsteg 9 hin geneigt, aus dem die Anlagenoppe 12 herausragt.

Wie FIG 3 ferner zeigt,hat auch die Zungenfeder 11 eine Knickkante 15. In dieser Knickkante 15, die quer zur Zungenfeder 11 verläuft, d.h. parallel zu der Längsrichtung der Gittermaschen 7 ist, ist die Zungenfeder 11 zu dem Blechsteg 9 hin geneigt, an dem sie angebracht ist und aus dem sie herausragt.

Ferner hat die Zungenfeder 11 einen Durchbruch 17 mit der Kontur eines gleichschenkligen Trapezes, dessen zueinander parallele Basen zur Längsrichtung der Gittermaschen 7 parallel sind. Die Kontur des Durchbruchs 17 verjüngt sich in Richtung zur Biegekante 13, an der die Zungenfeder 11 am Blechsteg 9 angebracht ist. Die kleinere Basis des gleichschenkligen Trapezes liegt in dieser Biegekante 13. Die Knickkante 15 der Zungenfeder 11 befindet sich zwischen dem Durchbruch 17 und der in eine der Gittermaschen 7 hineinragenden (langen) Zungenkante 16 der Zungenfeder 11.

An einem der Blechstege 8 des in FIG 2 dargestellten Abstandhaltergitters 5 sind an einer Wand zwischen zwei anderen Gittermaschen 7 zwei Anlagenoppen 18 ausgebildet.

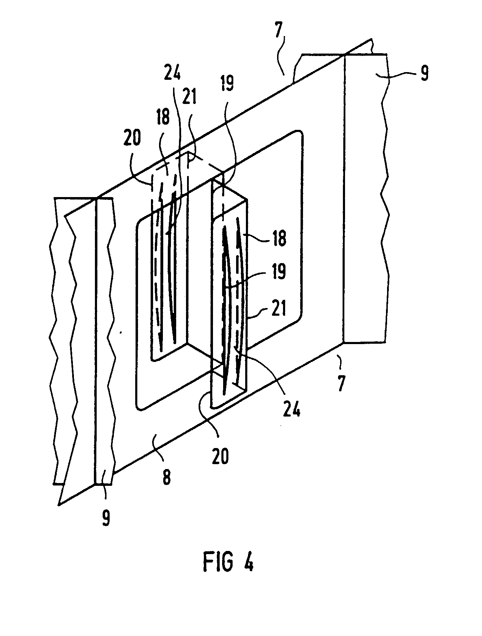

Wie FIG 4 zeigt, besteht jeder dieser beiden Anlagenoppen 18 aus einem Blechstreifen, der an einer Wand jeweils einer Gittermasche 7 aus dem Blechsteg 8 herausgeschnitten und an einer zur Längsrichtung der Gittermaschen 7 parallelen Biegekante 19 im Blechsteg 8 jeweils in eine von zwei benachbarten Gittermaschen 7 hineingebogen ist. Jeder der beiden Anlagenoppen 18 weist im Blechstreifen zwischen der Biegekante 19 und seiner aus dem Blechsteg 8 herausragenden Endkante 20 eine Knickkante 21 auf, die parallel zur Längsrichtung der Gittermaschen 7 und damit auch parallel zu den Biegekanten 19 ist und in der der Blechstreifen der Anlagenoppen 18 jeweils mit der Endkante 20 zu dem Blechsteg 8 hin gebogen ist, an dem er angebracht ist.

Die Zungenfeder 11 nach FIG 3 bildet zwischen der Knickkante 15 und der Endkante 16 eine Anlagefläche beispielsweise für einen mit Kernbrennstoff gefüllten Brennstab 6, der sich innerhalb der Gittermasche 7 befindet, in die die Zungenfeder 11 hineinragt. Ähnlich bilden die Anlagenoppen 18 nach FIG 4 zwischen der Knickkante 21 und der Endkante 20 eine Anlagefläche ebenfalls für einen in der benachbarten Gittermasche 7 angeordneten, mit Kernbrennstoff gefüllten Brennsstab, der sich mit seiner Längsachse in Längsrichtung der Gittermaschen 7 erstreckt. Die Federkonstante einer Zungenfeder 11 und einer Anlagenoppe 12 bzw. 18 ist durch den Quotienten aus einer an der Endkante 16 der Zungenfeder 11 bzw. 20 der Anlagenoppen 12 bzw. 18 angreifenden Kraft und dem durch diese Kraft verursachten Federweg gegeben. Kraft und Federweg sind jeweils in einem rechten Winkel zu der Wand der Gittermaschen gerichtet, an der die Zungenfeder bzw. die Anlagenoppe angebracht ist. Je kleiner die Fläche des Durchbruchs 17 einer Zungenfeder 11 ist, umso härter ist diese Zungenfeder 11, d.h. umso größer ist ihre Federkonstante. Durch Auswahl der Größe der Fläche des Durchbruchs 17 kann also die Federkonstante der Zungenfeder 11 kleiner als die Federkonstante der dieser Zungenfeder 11 in einer Gittermasche 7 zugeordneten Anlagenoppe 12 bzw. 18 sein, so daß ein in dieser Gittermasche 7 angeordneter Brennstab eine Zungenfeder 11 vorfindet, die elastisch nachgiebiger als die Anlagenoppe 12 oder 18 ist, die dieser Zungenfeder 11 zugeordnet ist. Dadurch gelingt es, einen Brennstab 6 in einer Gittermasche eines gitterförmigen Abstandhalters 5 auch in einem Reaktorkern ortsfest kraftschlüssig zu halten, in dem ein diesen Brennstab 6 und diesen Abstandhalter 5 aufweisendes Kernreaktorbrennelement von einem flüssigen Kühlmittel in Längsrichtung der Brennstäbe ständig durchströmt wird.

In günstiger Weise kann - wie FIG 3 zeigt - zwischen der aus dem Blechsteg 9 herausragenden Endkante 16 der Zungenfeder 11 und der Knickkante 15 ein federnder Querstreifen 23 durch zwei beabstandete Querschlitze 30 aus der Zungenfeder 11 herausgebildet sein. Ähnlich kann ein solcher federnder Querstreifen 24 - wie FIG 4 zeigt - zwischen der Endkante 20 und der Knickkante 21 der Anlagenoppen 18 herausgebildet sein. In gleicher Weise kann auch die Anlagenoppe 12 nach FIG 3 einen solchen federnden Querstreifen aufweisen. Diese federnden Querstreifen bilden eine linienförmige, elastische, nachgiebige Anlagestelle an einem in den Gittermaschen angeordneten Stab, z.B. einen Brennstab 6, auf den sie zu gewölbt sind, so daß "fretting" mit noch größerer Sicherheit vermieden wird.

Die Seitenflächen sowohl der Zungenfedern als auch der Anlagenoppen des gitterförmigen Abstandhalters erstrecken sich in Längsrichtung der Gittermaschen. In dieser Längsrichtung wird auch ein Kernreaktorbrennelement mit einem solchen Abstandhaltergitter im Reaktorkern eines Kernreaktors von einem flüssigen Kühlmittel durchströmt wird. Dementsprechend wird dieser Strömung durch die Zungenfedern 11 und die Anlagenoppen 12 und 18 nur wenig Strömungswiderstand entgegengesetzt.

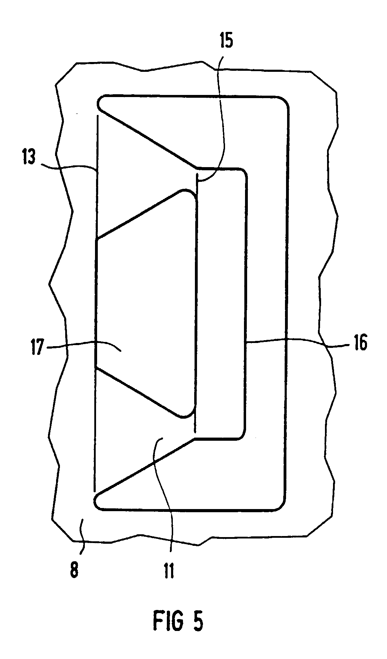

FIG 5, in der gleiche Teile mit gleichen Bezugszeichen wie in FIG 3 versehen sind, zeigt eine Zungenfeder 11, die sich zum Blechsteg 8 eines gitterförmigen Abstandhalters hin verbreitet, an dem diese Zungenfeder 11 angebracht ist. Diese Zungenfeder 11 hat ein gleichschenkliges Trapez als Außenkontur und eine (lange) Zungenkante 13 in Längsrichtung der Gittermaschen, um die die Zungenfeder 11 aus dem Blechsteg 8 in eine Gittermasche hineingebogen ist.

## Patentansprüche

1. Abstandhalter für ein Kernreaktorbrennelement mit sich hochkant durchsetzenden Blechstegen (8, 9), die Gittermaschen (7) bilden, sowie mit einer Anlagenoppe (12, 18) an einem Blechsteg (8, 9) in einer Gittermasche (7) und mit einer aus einem Blechsteg (8, 9) herausragenden Zungenfeder (11), die der Anlagenoppe zum kraftschlüssigen Halten eines Stabs zugeordnet ist und die an einer sich in Längsrichtung der Gittermasche (7) erstreckenden Zungenkante (13) an dem Blechsteg (8, 9) in dieser Gittermasche (7) angebracht ist,
**dadurch gekennzeichnet,** daß sich in der Zungenfeder (11) ein Durchbruch (17) befindet, dessen Kontur sich zum Blechsteg (8, 9) hin verjüngt, an dem die Zungenfeder (11) angebracht ist.

2. Abstandhalter nach Anspruch 1,
**dadurch gekennzeichnet,** daß sich die Außenkontur der Zungenfeder (11) zum Blechsteg (8, 9) hin verbreitert, an dem die Zungenfeder (11) angebracht ist.

3. Abstandhalter nach Anspruch 1,
**dadurch gekennzeichnet,** daß die Außenkontur der Zungenfeder (11) ein Rechteck ist.

4. Abstandhalter nach Anspruch 1,
**dadurch gekennzeichnet,** daß die Zungenfeder (11) an einer in die Gittermasche (7) hineinragenden Zungenkante (16) unter Ausbildung einer zwischen dieser Zungenkante (16) und dem Durchbruch (17) befindlichen Knickkante (15) zu dem Blechsteg (8, 9) hin geknickt ist, an dem die Zungenfeder (11) angebracht ist.

5. Abstandhalter nach Anspruch 4,
**dadurch gekennzeichnet,** daß sich zwischen der in die Gittermasche (7) hineinragenden Zungenkante (16) und der Knickkante (15) ein federnder Querstreifen (23) befindet.

6. Abstandhalter nach einem der Ansprüche 1 bis 3,
**dadurch gekennzeichnet,** daß die Anlagenoppe (12, 18) ein mit einer Endkante (20) aus dem Blechsteg (8, 9) herausragender Blechstreifen ist, dessen Federkonstante größer als die der Zungenfeder (11) ist.

7. Abstandhalter nach Anspruch 6,
**dadurch gekennzeichnet,** daß der die Anlagenoppe (12, 18) bildende Blechstreifen eine quer verlaufende Knickkante (14, 21) aufweist, an der der Blechstreifen zu dem Blechsteg (8, 9) hin geknickt ist, aus dem dieser die Anlagenoppe (12, 18) bildende Blechstreifen herausragt.

8. Abstandhalter nach Anspruch 7,
**dadurch gekennzeichnet,** daß sich zwischen der aus dem Blechsteg herausragenden Endkante (20) des Blechstreifens und der Knickkante (14, 21) ein federnder Querstreifen befindet.

9. Kernreaktorbrennelement, das einen Abstandhalter gemäß einem der Ansprüche 1-8 aufweist.

## Claims

1. Spacer for a nuclear reactor fuel element, with sheet metal webs (8, 9) which intersect one another on edge and which form grid meshes (7), as well as with a bearing boss (12, 18) on a sheet metal web (8, 9) in a grid mesh (7) and with a leaf spring (11) which projects from a sheet metal web (8, 9) and is assigned to the bearing boss for the nonpositive holding of a rod and which is attached to the sheet metal web (8, 9) in the grid mesh (7) at a leaf edge (13) extending in the longitudinal direction of this grid mesh (7), characterized in that there is located in the leaf spring (11) a perforation (17), the contour of which narrows towards the sheet metal web (8, 9), to which the leaf spring (11) is attached.

2. Spacer according to Claim 1, characterized in that the outer contour of the leaf spring (11) widens towards the sheet metal web (8, 9), to which the leaf spring (11) is attached.

3. Spacer according to Claim 1, characterized in that the outer contour of the leaf spring (11) is a rectangle.

4. Spacer according to Claim 1, characterized in that the leaf spring (11) is bent at a leaf edge (16) projecting into the grid mesh (7), to form a bending edge (15) located between this leaf edge (16) and the perforation (17), said leaf spring being bent relative to the sheet metal web (8, 9), to which the leaf spring (11) is attached.

5. Spacer according to Claim 4, characterized in that a resilient transverse strip (23) is located between the leaf edge (16), projecting into the grid mesh (7), and the bending edge (15).

6. Spacer according to one of Claims 1 to 3, characterized in that the bearing boss (12, 18) is a sheet metal strip which projects with an end edge (20) from the sheet metal web (8, 9) and the spring constant of which is higher than that of the leaf spring (11).

7. Spacer according to Claim 6, characterized in that the sheet metal strip forming the bearing boss (12, 18) has a transversely extending bending edge (14, 21), at which the sheet metal strip is bent relative to the sheet metal web (8, 9), from which this sheet metal strip forming the bearing boss (12, 18) projects.

8. Spacer according to Claim 7, characterized in that a resilient transverse strip is located between that end edge (20) of the sheet metal strip projecting from the sheet metal web and the bending edge (14, 21).

9. Nuclear reactor fuel element which has a spacer according to one of Claims 1-8.

## Revendications

1. Entretoise pour un assemblage combustible de réacteur nucléaire, comportant des barrettes (8, 9) en tôle s'entrelaçant de champs, qui forment la maille (7) de grille, ainsi qu'un bossage (12, 18) de butée sur une barrette (8, 9) en tôle dans une maille (7) de grille et un ressort (11) à languette faisant saillie d'une barrette (8, 9) en tôle, qui est associée au bossage de butée pour le maintien positif d'un crayon et qui est montée, sur un bord (13) de languette s'étendant dans la direction longitudinale de la maille (7) de grille, sur la barrette (8, 9) en tôle dans cette maille (7) de grille, caractérisée en ce qu'il se trouve dans le ressort (11) à languette une ouverture (17), dont le contour se rétrécit dans la direction de la barrette (8, 9) en tôle, à laquelle le ressort (11) à languette est monté.

2. Entretoise suivant la revendication 1, caractérisée en ce que le contour extérieur du ressort (11) à languette s'élargit dans la direction de la barrette (8, 9) en tôle, à laquelle est monté le ressort (11) à languette.

3. Entretoise suivant la revendication 1, caractérisée en ce que le contour extérieur du ressort (11) à languette est un rectangle.

4. Entretoise suivant la revendication 1, caractérisée en ce que, à un bord (16) de languette faisant saillie dans la maille (7) de grille, le ressort (11) à languette est coudé, avec formation d'un bord (15) de coude se trouvant entre ce bord (16) de languette et l'ouverture (17), vers la barrette (8, 9) en tôle, sur laquelle est monté le ressort (11) languette.

5. Entretoise suivant la revendication 4, caractérisée en ce qu'une bande (23) transversale élastique se trouve entre le bord (16) de languette faisant saillie dans la maille (7) de grille et le bord (15) coudé.

6. Entretoise suivant l'une des revendications 1 à 3, caractérisée en ce que le bossage (12, 18) de butée est une bande transversale faisant saillie hors de la barrette (8, 9) en tôle par un bord (20) d'extrémité, dont la constante de ressort est supérieure à celle du ressort (11) à languette.

7. Entretoise suivant la revendication 6, caractérisée en ce que la bande en acier formant le bossage (12, 18) de butée comporte un bord (14, 21) de coude s'étendant transversalement, sur lequel la bande en tôle est coudée vers la barrette (8, 9) en tôle, de laquelle cette bande en tôle formant le bossage (12, 18) de butée fait saillie.

8. Entretoise suivant la revendication 7, caractérisée en ce qu'une bande transversale élastique se trouve entre le bord (20) d'extrémité, faisant saillie de la barrette en tôle, de la bande en tôle et le bord (14, 21) de coude.

9. Assemblage combustible d'un réacteur nucléaire, qui comporte une entretoise suivant l'une des revendications 1 à 8.
